(19) Europäisches Patentamt
European Patent Office
Office européen des brevets

(11) **EP 4 192 050 A1**

(12) **EUROPEAN PATENT APPLICATION**
published in accordance with Art. 153(4) EPC

(43) Date of publication:
**07.06.2023 Bulletin 2023/23**

(21) Application number: **21854033.4**

(22) Date of filing: **02.08.2021**

(51) International Patent Classification (IPC):
***H04W 4/40*** (2018.01)

(52) Cooperative Patent Classification (CPC):
**H04W 4/40; H04W 72/02; H04W 72/12;
H04W 72/54; H04W 72/56**

(86) International application number:
**PCT/CN2021/110145**

(87) International publication number:
**WO 2022/028379 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2020 CN 202010785378**

(71) Applicant: **Huawei Technologies Co., Ltd.
Shenzhen, Guangdong 518129 (CN)**

(72) Inventor: **YANG, Fan
Shenzhen, Guangdong 518129 (CN)**

(74) Representative: **Huawei European IPR
Huawei Technologies Duesseldorf GmbH
Riesstraße 25
80992 München (DE)**

(54) **RESOURCE AWARENESS METHOD AND COMMUNICATION APPARATUS**

(57) Embodiments of this application provide a resource sensing method and a communication apparatus. The resource sensing method may include: determining, by a first terminal device in a first selection window, a first candidate resource set for sidelink transmission, and determining, by the first terminal device, a second candidate resource set based on a resource sensing result in a first sensing window, where the second candidate resource set is a universal set or a subset of the first candidate resource set; and sensing, by the first terminal device, a sidelink resource in a second sensing window, and sending a resource sensing result in the second sensing window to a second terminal device at a first moment, where the first moment is determined based on the second candidate resource set. Using embodiments of this application, accuracy of resource sensing can be improved, and a probability of a resource collision can be reduced.

FIG. 2

**Description**

**CROSS-REFERENCE TO RELATED APPLICATIONS**

This application claims priority to Chinese Patent Application No. 202010785378.2, filed with the China National Intellectual Property Administration on August 6, 2020 and entitled "RESOURCE SENSING METHOD AND COMMUNICATION APPARATUS", which is incorporated by reference herein in its entirety.

**TECHNICAL FIELD**

This application relates to the field of communication technologies, and in particular, to a resource sensing method and a communication apparatus.

**BACKGROUND**

In NR V2X, two resource scheduling manners are supported. One is a resource allocation mode 1 (Resource Allocation Mode-1, RA mode-1) based on scheduling performed by a base station, and the other is a resource allocation mode 2 (Resource Allocation Mode-2, RA mode-2) based on sensing and selection performed by a terminal device on a (pre)configured resource. When the RA mode-1 is used for resource scheduling, a resource for sending a physical sidelink control channel (Physical Sidelink Control Channel, PSCCH) or a physical sidelink share channel (Physical Sidelink Share Channel, PSSCH) by a terminal device on a sidelink is scheduled and controlled by a base station. When the RA mode-2 is used for resource scheduling, a terminal device senses available resources on a sidelink resource configured by a base station or a network device or predefined, and selects a resource from the available resources to send a PSCCH or a PSSCH. When the RA mode-2 is used for resource scheduling, there are two time windows: a sensing (sensing) window and a selection (selection) window. The terminal device senses an occupation status of a sidelink resource in the sensing window, and selects an appropriate resource based on a sensing result in the selection window to send the PSSCH/PSCCH.

**SUMMARY**

Embodiments of this application provide a resource sensing method and a communication apparatus, which may be applied to Internet of Vehicles, such as V2X communication, a long term evolution-vehicle (long term evolution-vehicle, LTE-V) technology, or vehicle to vehicle (vehicle to vehicle, V2V) communication, or may be applied to fields of intelligent driving, intelligent connected vehicles, and the like. In this case, accuracy of resource sensing can be improved, a probability of resource collision can be reduced, and communication efficiency can be improved.

According to a first aspect, an embodiment of this application provides a resource sensing method. The method may be performed by a first terminal device, or may be performed by a component (such as a processor, a chip, or a chip system) of the first terminal device. The resource sensing method may include: determining, by a first terminal device in a first selection window, a first candidate resource set for sidelink transmission, and determining, by the first terminal device, a second candidate resource set based on a resource sensing result in a first sensing window, where the second candidate resource set is a universal set or a subset of the first candidate resource set. For example, the first terminal device excludes a sidelink transmission resource occupied in the first selection window from the first candidate resource set based on the resource sensing result in the first sensing window, to obtain an unoccupied second candidate resource set.

The first terminal device further senses a sidelink resource in a second sensing window, and sends a resource sensing result in the second sensing window to a second terminal device at a first moment. The first moment may be determined based on the second candidate resource set. For example, the first moment is a start moment of a resource for sidelink transmission and selected by a first terminal from the second candidate resource set, and the resource for sidelink transmission is used for sending the resource sensing result in the second sensing window.

Correspondingly, the second terminal device may determine a third candidate resource set for sidelink transmission in the second selection window, and the second terminal device further determines a fourth candidate resource set based on the resource sensing result in the second sensing window sent by the first terminal device and/or the resource sensing result of a second terminal, so that a sidelink resource for sending data is determined based on the fourth candidate resource set.

By implementing the method described in the first aspect, the first terminal device may not only sense a resource for sidelink transmission of the first terminal device in the first sensing window, but also sense a resource for sidelink transmission of the second terminal device in the second sensing window, and sends the resource sensing result in the second sensing window to the second terminal device, so that the second terminal device determines the fourth candidate resource set based on the resource sensing result in the second sensing window, and further determines the sidelink resource for sending data based on the fourth candidate resource set. In some scenarios, the second terminal device cannot sense resources comprehensively. For example, when another terminal device sends sidelink control information (Sidelink Control information, SCI) and sidelink data, the second terminal device is sending data, but does not receive the SCI and the sidelink data. In another example, the second terminal device is relatively far away from a terminal device that sends SCI and sidelink data, and does not receive the SCI and the sidelink data. The second terminal device may determine the sidelink resource for sending data, based on a result of resource sensing performed by the first terminal device for the second terminal device in the second sensing window. Therefore, resource sensing accuracy is improved, a probability of a resource collision is reduced, and communication efficiency is improved.

In a possible implementation of the first aspect, a start time domain position of the second sensing window may be determined based on the first moment and a first offset, and an end time domain position of the second sensing window may be determined based on the first moment and a second offset. The first offset is greater than the second offset. For example, the first offset is $T_y$, the second offset is $T_{proc,y}$, and the first moment at which the first terminal device sends a PSSCH/PSCCH is a moment m, then the start time domain position of the second sensing window may be $m - T_y$, and the end time domain position of the second sensing window may be $m - T_{proc,y}$.

By implementing the method, the second sensing window is determined based on the first moment at which the first terminal device sends data, so that the second terminal device can conveniently determine a location of the second sensing window.

In a possible implementation of the first aspect, the first offset and/or the second offset are or is determined based on the first sensing window.

The first offset and/or the second offset may be determined based on a configuration parameter of the first sensing window.

By implementing the method, the second sensing window may be determined based on the configuration parameter of the first sensing window, with no need of a parameter specially configured for the second sensing window. That is, the first sensing window and the second sensing window share a same set of configuration parameter, thereby reducing signaling overheads.

In a possible implementation of the first aspect, the first offset may be $T_0 + C$, and the second offset may be $T_{proc,0} + C$.

$T_0$ is an offset of a start time domain position of the first sensing window relative to a second moment, $T_{proc,0}$ is an offset of an end time domain position of the first sensing window relative to the second moment, and the second moment is a moment at which the first terminal device triggers resource selection; and $C$ may be a constant greater than or equal to zero.

By implementing the method, the second sensing window may be determined based on the configuration parameter of the first sensing window, with no need of a parameter specially configured for the second sensing window. That is, the first sensing window and the second sensing window share a same set of configuration parameter, thereby reducing signaling overheads.

In a possible implementation of the first aspect, the second offset is $T_{proc,0}$, $T_{proc,0}$ is an offset of an end time domain position of the first sensing window relative to the second moment, and the second moment is a moment at which the first terminal device triggers resource selection.

The first offset may be determined based on a ratio relationship between a length of the first sensing window and a length of the second sensing window. Alternatively, the first offset may be determined based on a priority of data sent by the first terminal device and/or a priority of data sent by the second terminal device. For example, different priorities correspond to different sensing window lengths, and the first offset is determined based on a length of the second sensing window and an end time domain position of the second sensing window.

By implementing the method, a location of the second sensing window may be determined by defining a ratio relationship between the length of the first sensing window and the length of the second sensing window, with no need of a parameter specially configured for the second sensing window, thereby reducing signaling overheads.

The location of the second sensing window may be determined based on a priority of data sent by the first terminal device and/or a priority of data sent by the second terminal device, to ensure transmission of high-priority data.

In a possible implementation of the first aspect, the first offset and/or the second offset may be configured by a network device; or the first offset and/or the second offset may be sent by the second terminal device to the first terminal device.

By implementing the method, a parameter of the second sensing window may be configured for the second sensing window, so that the first terminal device can perform resource sensing in the second sensing window in a targeted manner.

In a possible implementation of the first aspect, a sensed sidelink resource may be located in one or more resource pools, and the sidelink resource included in the resource pool may be divided into at least one time-frequency resource area, and one time-frequency resource area includes one or more slots and one or more subchannels.

The resource sensing result may include one or more items of the following information: resource occupied information and/or resource unoccupied information.

The resource occupied information may include an identifier of an unavailable time-frequency resource area in the at least one time-frequency resource area.

The resource unoccupied information may include an identifier of an available time-frequency resource area in the at least one time-frequency resource area.

In some optional implementations, the resource occupied information and the resource unoccupied information may be represented using a bitmap. The bitmap may include at least one bit, one bit corresponds to one of the at least one time-frequency resource area, and a value of the bit may be for indicating whether a time-frequency resource area corresponding to the bit is available.

By implementing the method, the resource sensing result in the second sensing window may be fed back at a granularity of the time-frequency resource area, thereby reducing bit overheads of the resource sensing result.

In a possible implementation of the first aspect, the first terminal device may receive one or more priorities from the second terminal device. Further, the first terminal device may determine the first priority based on the one or more priorities.

The first terminal device may receive a reference signal received power threshold or a reference signal received power threshold range from the second terminal device. Further, the first terminal device may determine the first reference signal received power threshold based on the reference signal received power threshold or the reference signal received power threshold range.

When sensing the sidelink resource in the second sensing window, the first terminal device may sense the sidelink resource in the second sensing window using the first priority and the first reference signal received power threshold.

By implementing the method, the first terminal device can determine a priority and a reference signal received power threshold that are used when the resource sensing is performed in the second sensing window.

In a possible implementation of the first aspect, the first priority is a priority whose priority value is the same as a value of a second priority in one or more priorities sent by the second terminal device; or

the first priority is a priority with a smallest priority value in the one or more priorities; or
the first priority is a priority with a smallest priority value in the second priority and the one or more priorities sent by the second terminal device.

The second priority is used by the first terminal device to perform the resource sensing in the first sensing window.

In a possible implementation of the first aspect, the first reference signal received power threshold is $M + \Delta a * k$; and the first reference signal received power threshold meets a target condition.

The target condition may include: a ratio of a quantity of available time-frequency resource areas that are sensed in the second sensing window using a second reference signal received power threshold to a total quantity of the at least one time-frequency resource area is less than a first threshold. A ratio of the quantity of available time-frequency resource areas that are sensed in the second sensing window using the first reference signal received power threshold to the total quantity of the at least one time-frequency resource area is greater than or equal to the first threshold, and the second reference signal received power threshold is $M + \Delta a * (k - 1)$.

$M$ is the reference signal received power threshold or a minimum value in the reference signal received power threshold range, $\Delta a$ is a power increment, $k$ is an integer greater than or equal to 0, and the first reference signal received power threshold $M + \Delta a * k$ falls within the reference signal received power threshold range.

In a possible implementation of the first aspect, the first terminal device sends the first priority and/or the first reference signal received power threshold to the second terminal device.

By implementing the method, the second terminal device can determine the priority and the reference signal received power threshold that are used when the first terminal device performs the resource sensing in the second sensing window.

According to a second aspect, an embodiment of this application provides a resource sensing method. The method may be performed by a second terminal device, or may be performed by a component (such as a processor, a chip, or a chip system) of the second terminal device. The resource sensing method may include: receiving, by the second terminal device, a resource sensing result in a second sensing window from a first terminal device at a first moment. The first moment is determined based on a second candidate resource set, the second candidate resource set is determined by the first terminal device based on a resource sensing result in the first sensing window, the second candidate resource set is a universal set or a subset of the first candidate resource set, and the first candidate resource set is a resource set that is determined by the first terminal device in the first selection window for sidelink transmission.

The second terminal device determines a third candidate resource set for sidelink transmission in the second selection window, and the second terminal device determines a fourth candidate resource set based on a resource sensing result in the second sensing window. The fourth candidate resource set is a universal set or a subset of the third candidate resource set.

The second terminal device determines a sidelink resource for sending data based on the fourth candidate resource set.

In a possible implementation of the second aspect, a start time domain position of the second sensing window is determined based on a first moment and a first offset, an end time domain position of the second sensing window is determined based on the first moment and a second offset, and the first offset is greater than the second offset.

According to a third aspect, an embodiment of this application provides a communication apparatus, including modules or units configured to perform the method according to the first aspect or the second aspect.

According to a fourth aspect, an embodiment of this application provides a communication apparatus, including a processor. The processor is coupled to a memory, and may be configured to execute an instruction in the memory, to implement the method according to the first aspect or the second aspect. Optionally, the communication apparatus further includes the memory. Optionally, the communication apparatus further includes a communication interface, and the processor is coupled to the communication interface.

According to a fifth aspect, an embodiment of this application provides a processor, including an input circuit, an output circuit, and a processing circuit. The processing circuit is configured to receive a signal through the input circuit, and transmit a signal through the output circuit, so that the processor performs the method according to the first aspect or the second aspect.

In a specific implementation process, the processor may be one or more chips, the input circuit may be an input pin, the output circuit may be an output pin, and the processing circuit may be a transistor, a gate circuit, a trigger, any logic circuit, or the like. An inputted signal received by the input circuit may be received and inputted by, for example, but not limited to, a receiver, a signal outputted by the output circuit may be outputted to, for example, but not limited to, a transmitter and transmitted by the transmitter, and the input circuit and the output circuit may be a same circuit. The circuit is used as the input circuit and the output circuit at different moments. Specific implementations of the processor and the circuits are not limited in embodiments of this application.

According to a sixth aspect, an embodiment of this application provides a processing apparatus, including a processor and a memory. The processor is configured to read an instruction stored in the memory, receive a signal through a receiver, and transmit a signal through a transmitter, to perform the method according to the first aspect or the second aspect.

Optionally, there are one or more processors, and there are one or more memories.

Optionally, the memory may be integrated into the processor, or the memory and the processor are separately disposed.

In a specific implementation process, the memory may be a non-transitory (non-transitory) memory, for example, a read-only memory (read only memory, ROM). The memory and the processor may be integrated into a same chip, or may be disposed on different chips. A type of the memory and a manner in which the memory and the processor are disposed are not limited in this embodiment of this application.

It should be understood that a related data exchange process, for example, sending the resource sensing result, may be a process of outputting the resource sensing result from the processor, and receiving the resource sensing result may be a process of receiving the resource sensing result by the processor. Specifically, data outputted by the processor may be outputted to the transmitter, and inputted data received by the processor may be from the receiver. The transmitter and the receiver may be collectively referred to as a transceiver.

The processing apparatus according to the sixth aspect may be one or more chips. The processor in the processing apparatus may be implemented through hardware, or may be implemented through software. When implemented through the hardware, the processor may be a logic circuit, an integrated circuit, or the like. When implemented through the software, the processor may be a general-purpose processor, and is implemented by reading software code stored in the memory. The memory may be integrated into the processor, or may be located outside the processor and exist independently.

According to a seventh aspect, an embodiment of this application provides a computer program product. The computer program product includes a computer program (which may also be referred to as code or an instruction). When the computer program is run, a computer is enabled to perform the method according to the first aspect or the second aspect.

According to an eighth aspect, an embodiment of this application provides a readable storage medium. The readable storage medium stores a computer program (which may also be referred to as code or an instruction). When run on a computer, the method according to the first aspect or the second aspect is implemented.

According to a ninth aspect, an embodiment of this application provides a communication system, including the first terminal device and the second terminal device mentioned above.

According to a tenth aspect, a chip system is provided. The chip system includes a processor and an interface circuit. The processor is configured to invoke, from a memory, a computer program (which may also be referred to as code or an instruction) stored in the memory and run the computer program, to implement functions in the first aspect or the second aspect. In a possible design, the chip system further includes the memory, and the memory is configured to store a necessary program instruction and data. The chip system may include a chip, or may include a chip and another discrete device.

## BRIEF DESCRIPTION OF DRAWINGS

FIG. 1a is an architectural diagram of a network system according to this application;
FIG. 1b is an architectural diagram of another network system according to this application;
FIG. 2 is a schematic flowchart of a resource sensing method according to this application;
FIG. 3 is a schematic diagram of a first sensing window and a second sensing window according to this application;
FIG. 4 is a schematic diagram of another first sensing window and another second sensing window according to this application;
FIG. 5 is a schematic diagram of a time-frequency resource area according to this application;
FIG. 6 is a schematic diagram of another time-frequency resource area according to this application;
FIG. 7 is a schematic block diagram of a communication apparatus according to an embodiment of this application;
FIG. 8 is a schematic block diagram of another communication apparatus according to an embodiment of this application; and
FIG. 9 is a schematic diagram of a structure of a chip according to an embodiment of this application.

## DESCRIPTION OF EMBODIMENTS

The technical solution in embodiments of this application may be applied to Internet of Vehicles, such as V2X communication, a long term evolution-vehicle (long term evolution-vehicle, LTE-V) technology, and vehicle to vehicle (vehicle to vehicle, V2V) communication, or may be applied to fields such as intelligent driving and intelligent connected vehicles, or may be applied to another wireless network, such as a Wi-Fi network, a long term evolution (long term evolution, LTE) network, a 5 generation (5 generation, 5G) network, or a new radio (new radio, NR) network, a device to device (device to device, D2D) network, a future network, and another new network that emerges with development of technologies.

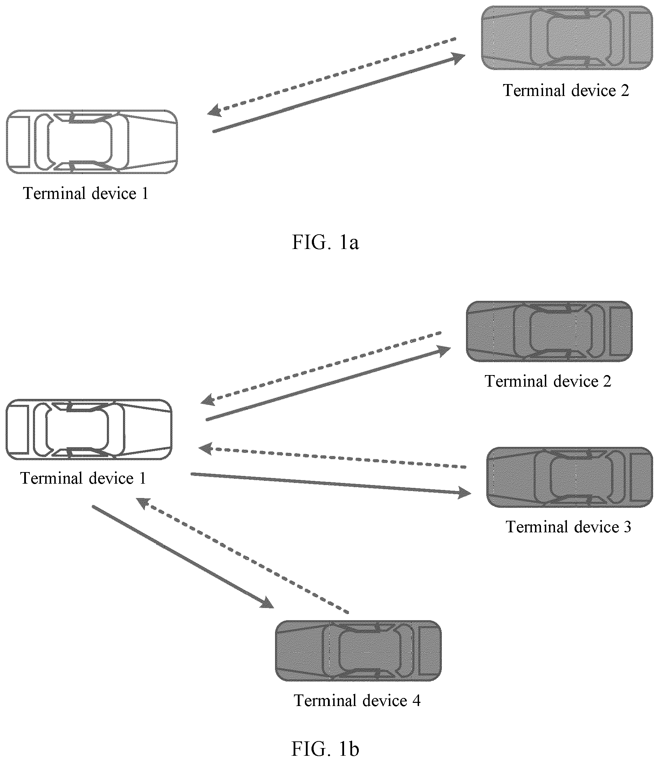

FIG. 1a is a schematic diagram of a network system that may be used in this application. The network system may include a terminal device 1 and a terminal device 2. The terminal device 1 may communicate with the terminal device 2 in a unicast manner.
FIG. 1b is a schematic diagram of another network system that may be used in this application. The network system may include a plurality of terminal devices. In FIG. 1b, four terminal devices are used as an example, which are a terminal device 1, a terminal device 2, a terminal device 3, and a terminal device 4. It may be understood that the communication system may further include another terminal device. This is not limited in this embodiment of this application. The terminal device 1 may communicate with the terminal device 2, the terminal device 3, and the terminal device 4 in a multicast manner, or the terminal device 1 may communicate with each terminal device in a unicast manner.
The terminal device may also be referred to as a user equipment UE, an access terminal, a terminal, a subscriber unit, a subscriber station, a mobile station, a mobile, a remote station, a remote terminal, a mobile device, a user terminal, a wireless network device, an in-vehicle terminal, a user agent, a user apparatus, an access point (access point), or another vehicle having a V2V communication capability. The terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another device connected to a wireless modem, an in-vehicle device, a wearable device, a terminal device in an Internet of Things, a terminal device in an Internet of Vehicles, a terminal device in any form in a future network, or the like. The terminal device may communicate with one or more core networks (core network, CN) through a network device. It may be understood that, in some possible application scenarios, the terminal device in this embodiment of this application may be a virtual reality (virtual reality, VR) terminal device with a wireless transceiver function, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal in transportation safety (transportation safety), a wireless terminal device in smart city (smart city), and a wireless terminal in smart home (smart home). The terminal device may be deployed on land, including an indoor or outdoor device, a handheld device, or an in-vehicle device; or may be deployed on water (for example, on a ship); or may be deployed in the air (for example, on an airplane, a balloon, or a satellite).

It should be understood that this embodiment of this application is not only applied to the system architectures shown in FIG. 1a and FIG. 1b. For example, a communication system to which the resource sensing method according to embodiments of this application may be applied may include more or fewer elements or devices.

In this embodiment of this application, a first terminal device may be the terminal device 1 in the system architectures shown in FIG. 1a and FIG. 1b, and a second terminal device may be the terminal device 2, the terminal device 3, or the terminal device 4 in the system architectures shown in FIG. 1a and FIG. 1b.

The first terminal device may perform sensing for transmission of data (for example, a PSCCH/PSSCH) of the first terminal device to obtain a candidate resource set, and select a corresponding resource from the candidate resource set to send the PSCCH/PSSCH. Similarly, the second terminal device may also sense and select a resource for transmission of data of the second terminal device. However, in some scenarios, the second terminal device cannot sense resources comprehensively. For example, when another terminal device sends SCI and data, the second terminal device is sending data, and therefore the second terminal device does not receive the SCI and the data. In another example, the second terminal device is far away from a terminal device that sends SCI, and therefore the second terminal device does not receive the SCI.

In this embodiment of this application, the first terminal device may not only sense a resource for transmission of data of the first terminal device in a first sensing window, but also sense a resource for transmission of data of the second terminal device in a second sensing window. Further, the first terminal device may send a resource sensing result in the second sensing window to the second terminal device in a unicast or multicast manner. Therefore, accuracy of resource sensing of the second terminal device is improved, a probability of resource collision is reduced, and communication efficiency is improved.

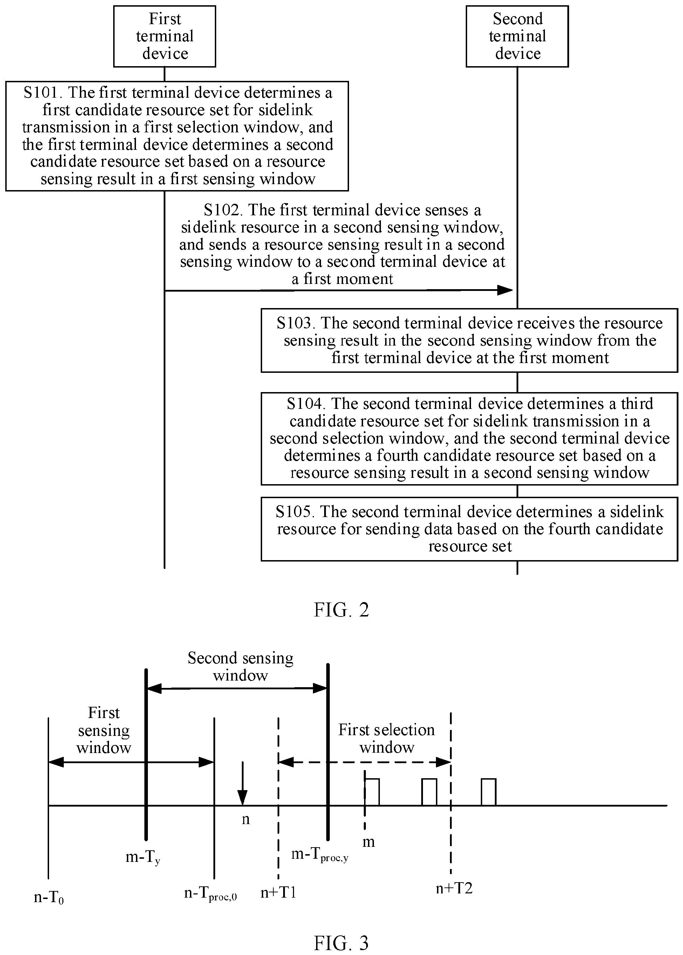

FIG. 2 is a schematic flowchart of a resource sensing method according to an embodiment of this application. FIG. 1a and FIG. 1b may be examples of network architectures to which the resource sensing method in this embodiment of this application may be applied. As shown in FIG. 2, the method may include S101, S102, and S103. Optionally, the method may further include S104 and S105. A sequence of performing S101, S102, S103, S104, and S105 is not limited in this embodiment of this application. As shown in the figure, the resource sensing method in this embodiment of this application includes, but is not limited to, the following steps.

S101. A first terminal device determines, in a first selection window, a first candidate resource set for sidelink transmission, and the first terminal device determines a second candidate resource set based on a resource sensing result in a first sensing window, where the second candidate resource set is a universal set or a subset of the first candidate resource set.

S102. The first terminal device senses a sidelink resource in a second sensing window, and sends a resource sensing result in the second sensing window to a second terminal device at a first moment, where the first moment is determined based on the second candidate resource set.

In an embodiment, when the first terminal device performs resource scheduling in RA mode-2, the first terminal device may sense occupancy of sidelink resources in the first sensing window, and select a sidelink resource for sending a PSSCH/PSCCH for the first terminal device in the first selection window based on a resource sensing result in the first sensing window.

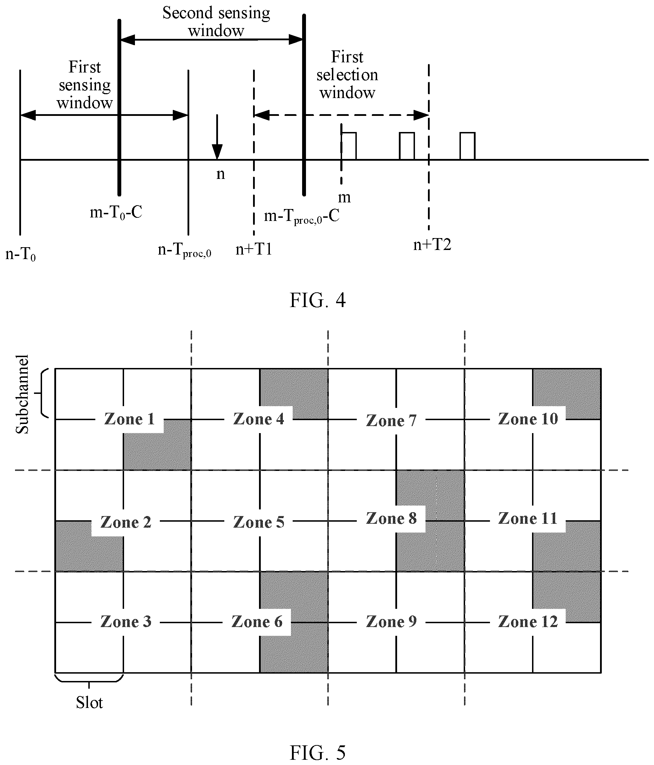

As shown in FIG. 3 and FIG. 4, in this embodiment of this application, a start time domain position of the first sensing window may be $n - T_0$, an end time domain position of the first sensing window may be $n - T_{proc,0}$, a start time domain position of the first selection window may be $n + T1$, and an end time domain position of the first selection window may be $n + T2$, where n is a second moment at which the terminal device triggers resource selection.

Specifically, optionally, the first terminal device may sense a sidelink resource configured by a base station or a network device or a predefined sidelink resource in the first sensing window, to obtain the resource sensing result in the first sensing window. Optionally, the sidelink resource may be located in one or more resource pools.

Optionally, the first terminal device may sense the sidelink resource in the first sensing window using a second priority and a second reference signal received power threshold. The second priority may be a priority of to-be-sent data of the first terminal device, and the second reference signal received power threshold may be a reference signal received power threshold configured by the network device for the first terminal device. A resource sensing process of the first terminal device in the first sensing window may include: measuring, by the first terminal device, reference signal received power of the sidelink resource, and parsing, by the first terminal device, SCI carried on the sidelink resource. The SCI may include a priority of data carried on the sidelink resource, a sending period of the data, and the like. Further, the terminal device may further compare the reference signal received power obtained through measurement with the second reference signal received power threshold, to obtain a reference signal received power comparison result; and perform an operation on the priority included in the SCI and the second priority, and compare a priority operation result with a priority threshold, to obtain a priority comparison result. Further, the first terminal device may obtain the resource sensing result in the first sensing window based on the reference signal received power comparison result, the priority comparison result, and the sending period of the data obtained by parsing the SCI. Optionally, the resource sensing result may include an occupied sidelink resource and/or an unoccupied sidelink resource. For example, if the reference signal received power obtained through measurement is less than the second reference signal received power threshold, and the priority operation result and the priority threshold meet a specific condition, a corresponding sidelink resource is determined as an unoccupied sidelink resource in the first sensing window; otherwise, the corresponding sidelink resource is determined as an occupied sidelink resource.

The first terminal device may determine the first candidate resource set for sidelink transmission in the first selection window. For example, the first terminal device may be based on a size of a resource that needs to be sensed, the size of the resource that needs to be sensed may be determined based on a size of a resource occupied by to-be-sent data. Optionally, the first terminal device divides a to-be-sensed sidelink resource (for example, a sidelink resource in one or more resource pools) into a plurality of resource blocks. The plurality of resource blocks constitute the first candidate resource set, and each resource block represents a size of a resource for sending data. For example, if a size of a resource that needs to be sensed is one slot and one subchannel, a resource block consists of one slot and one subchannel. When a size of a to-be-sensed sidelink resource is ten slots and five subchannels, the to-be-sensed sidelink resource may be divided into 50 resource blocks, and the 50 resource blocks may constitute the first candidate resource set.

The first terminal device may determine a second candidate resource set from the first candidate resource set based on the resource sensing result in the first sensing window, where the second candidate resource set is a universal set or a subset of the first candidate resource set. A sidelink resource in the second candidate resource set may be an unoccupied resource determined based on the resource sensing result in the first sensing window. For example, the first terminal device may exclude a resource block that may be occupied from the first candidate resource set based on the resource sensing result in the first sensing window, and a set including the remaining resource blocks in the first candidate resource set is referred to as the second candidate resource set. The first terminal device may further select an appropriate resource from the second candidate resource set to send the PSSCH/PSCCH. For example, the first terminal device may choose to send the PSSCH/PSCCH at a first moment m.

In this embodiment of this application, in addition to sensing a resource for transmission of data of the first terminal device in the first sensing window and selecting a resource for transmission of data of the first terminal device in the first selection window based on the resource sensing result in the first sensing window, the first terminal device may further sense a resource for transmission of data of the second terminal device in the second sensing window, and send the resource sensing result in the second sensing window to the second terminal device, so that the second terminal device selects the sidelink resource for sending the PSSCH/PSCCH for the second terminal device based on the resource sensing result in the second sensing window.

The start time domain position of the second sensing window may be determined based on the first moment and the first offset, the end time domain position of the second sensing window may be determined based on the first moment and the second offset, and the first offset is greater than the second offset. For example, the first offset is $T_y$, the second offset is $T_{proc,y}$, and the first moment at which the first terminal device sends the PSSCH/PSCCH is a moment m. As shown in FIG. 3, the start time domain position of the second sensing window may be $m - T_y$, the end time domain position of the second sensing window may be $m - T_{proc,y}$, and the length of the second sensing window is $T_y - T_{proc,y}$. A value of the second offset may be greater than a preparation time of the PSSCH, the preparation time of the PSSCH may be equal to a preparation time for sending uplink data PUSCH, and the preparation time for sending the uplink data PUSCH may be:

$$T_{proc,SL} = \max((N_{SL} + d_{SL})(2048 + 144) \cdot \kappa \cdot 2^{-\mu} \cdot T_C, d_{BWP,SL}),$$

$$N_2 + N$$

or

$N_{SL}$ is a quantity of symbols related to a subcarrier spacing and a UE capability, $d_{SL}$ is related to a quantity of DMRSs or a pattern of the PSSCH, $T_c$ is a first time unit, $T_s$ is a second time unit, $\kappa$ is a ratio of $T_s$ to $T_c$, $\mu$ is the subcarrier spacing, the first time unit $T_c$ may be specifically a basic time unit of NR, and the second time unit $T_s$ may be specifically a basic time unit of LTE. N is a constant that may be equal to zero, and a value of N may be agreed on in a protocol or configured through signaling. For example, the value of N may be indicated through RRC or DCI. N may represent a specific quantity of time units or may represent a specific duration, for example, N = 0.5 ms.

In this embodiment of this application, the first moment at which the first terminal device sends the PSSCH/PSCCH is used as a reference to determine the second sensing window, so that the second terminal device determines a position of the second sensing window.

In a first optional implementation, the first offset and/or the second offset may be determined based on the first sensing window, that is, the first offset and/or the second offset may be determined based on a configuration parameter $T_0$ and/or $T_{proc,0}$ of the first sensing window. $T_0$ and $T_{proc,0}$ may be configured by a higher-layer parameter. According to this embodiment of this application, the second sensing window may be determined based on the configuration parameter of the first sensing window, with no need of a parameter specially configured for the second sensing window, thereby reducing signaling overheads. The following separately describes determining of the second sensing window based on the first sensing window with reference to Example 1, Example 2, and Example 3.

Example 1: The first offset may be $T_0 + C$, and the second offset may be $T_{proc,0} + C$. For example, the first moment at which the first terminal device sends the PSSCH/PSCCH is a moment m, then as shown in FIG. 4, the start time domain position of the second sensing window may be $m - T_0 - C$, and the end time domain position of the second sensing window may be $m - T_{proc,0} - C$, C is a constant greater than or equal to zero. The constant C may be agreed on in a protocol or configured through signaling, and for example, may be indicated through radio resource control (radio resource control, RRC) signaling or downlink control information (downlink control information, DCI). C may be a specific quantity of time units. For example, a value of C may be a slot, or a value of C may be a specific duration. In some optional implementations, a value of C may be zero, and in this case, lengths of the first sensing window and the second sensing window are the same.

Example 2: The second offset may be $T_{proc,0}$. For example, the first moment at which the first terminal device sends the PSSCH/PSCCH is a moment m, the end time domain position of the second sensing window may be $m - T_{proc,0}$, and the start time domain position of the second sensing window may be determined based on a priority of data sent by the first terminal device and/or a priority of data sent by the second terminal device. For example, a higher priority of data sent by the first terminal device and/or a higher priority of data sent by the second terminal device indicate a greater length of the second sensing window, and correspondingly, the first offset may be larger. Optionally, a correspondence between each priority and each sensing window length may be predefined. When the priority of data sent by the first terminal device and/or the priority of data sent by the second terminal device is determined, a sensing window length corresponding to the priority may be found from the correspondence, and the sensing window length is determined as the length of the second sensing window. The first terminal device may further determine the start time domain position of the second sensing window based on the end time domain position of the second sensing window and the length of the second sensing window.

Example 3: The second offset may be $T_{proc,0}$. For example, the first moment at which the first terminal device sends the PSSCH/PSCCH is a moment m, the end time domain position of the second sensing window may be $m - T_{proc,0}$, and the start time domain position of the second sensing window may be determined based on a ratio relationship between the length of the first sensing window and the length of the second sensing window. For example, a ratio relationship between the length of the first sensing window and the length of the second sensing window is P, where P may be agreed on in a protocol or may be configured through signaling. The first terminal device may determine the start time domain position of the second sensing window based on the length of the first sensing window, the end time domain position of the second sensing window, and the ratio relationship P.

In a second optional implementation, the first offset $T_y$ and/or the second offset $T_{proc,y}$ may be configured by the network device; or the first offset $T_y$ and/or the second offset $T_{proc,y}$ may be sent by the second terminal device to the first terminal device. The following separately describes determining of the second sensing window with reference to Example 4 and Example 5.

Example 4: $T_y$ and $T_{proc,y}$ may be indicated by the network device through higher-layer signaling or dynamic signaling. Optionally, $T_y$ may be the same as $T_0$, $T_{proc,y}$ may be the same as $T_{proc,0}$, or $T_y$ may be different from $T_0$, $T_{proc,y}$ may be different from $T_{proc,0}$, or the like. This is not limited in this embodiment of this application. It may be understood that, if $T_y$ is the same as $T_0$, and $T_{proc,y}$ is the same as $T_{proc,0}$, the second sensing window and the first sensing window may share a same set of configuration parameter to reduce signaling overheads.

Example 5: $T_y$ and $T_{proc,y}$ may be sent by the second terminal device to the first terminal device. Optionally, $T_y$ and $T_{proc,y}$ may be sent by the second terminal device to the first terminal device through the SCI. Specifically, optionally, $T_y$ and $T_{proc,y}$ may be sent to the first terminal device through first-level SCI or second-level SCI. Alternatively, $T_y$ and $T_{proc,y}$ may be sent by the second terminal device to the first terminal device through data, or a Media Access Control control element (MAC control element, MAC CE), or RRC signaling. Alternatively, $T_y$ and $T_{proc,y}$ may be sent by the second terminal device to the first terminal device through the PSCCH or the PSSCH.

It should be noted that the first optional implementation and the second optional implementation may be mutually referenced and combined. For example, the first offset may be determined by the first sensing window, and the second offset may be configured by the network device or sent by the second terminal device to the first terminal device. Alternatively, the second offset may be determined by the first sensing window, and the first offset may be configured by the network device or sent by the second terminal device to the first terminal device, or the like.

Optionally, the first terminal device may sense the sidelink resource included in the time-frequency resource area in the second sensing window. Specifically, the first terminal device may sense the sidelink resource in the second sensing window based on the first priority and the first reference signal received power threshold. The first priority may be determined based on one or more priorities received from the second terminal device, and the first reference signal received power threshold may be determined based on a reference signal received power threshold or a reference signal received power threshold range received from the second terminal device. The following separately describes a process of determining the first priority and a process of determining the first reference signal received power threshold in detail.

**The process of determining the first priority is as follows.** The first terminal device may determine the first priority in one or more of the following Manner 1, Manner 2, and Manner 3. For example, if the first priority cannot be determined in Manner 1, the first terminal device may continue to determine the first priority in Manner 2 or Manner 3 until the first priority is determined.

Manner 1. Select a priority that has the same priority value as a second priority used in the first sensing window from one or more priorities sent by the second terminal device.

Manner 2. Select a highest priority as a first priority from one or more priorities sent by the second terminal device, where the highest priority is a priority with a smallest priority value.

Manner 3. Select a priority with a smallest priority value from a second priority used by the first terminal device in the first sensing window and one or more priorities sent by the second terminal device as a first priority.

It may be understood that if the second terminal device sends a priority to the first terminal device, the first terminal device may determine the priority as the first priority, or the first terminal device may determine the first priority in the foregoing three manners.

**A process of determining the first reference signal received power threshold is as follows.** The first reference signal received power threshold may be determined starting from a reference signal received power threshold M. M may be a minimum value in the reference signal received power threshold range sent by the second terminal device, or may be a reference signal received power threshold sent by the second terminal device. If the reference signal received power threshold M is used to sense the sidelink resource included in at least one time-frequency resource area of the resource pool, and if a ratio of a determined quantity of available time-frequency resource areas to a total quantity of time-frequency resource areas included in the resource pool is less than a first threshold, a power increment $\Delta a$ is added to the reference signal received power threshold M, to obtain the reference signal received power threshold $M + \Delta a$. Certainly, if the determined quantity of available time-frequency resource areas is greater than or equal to the first threshold, M is determined as the first reference signal received power threshold. For a definition of the time-frequency resource area, refer to descriptions in subsequent embodiments. Details are not described temporarily.

When the reference signal received power threshold $M + \Delta a$ is obtained, if the sidelink resource included in the at least one time-frequency resource area of the resource pool is sensed using the reference signal received power threshold $M + \Delta a$, and if the ratio of the determined quantity of available time-frequency resource areas to the total quantity of time-frequency resource areas included in the resource pool is less than the first threshold, the power increment $\Delta a$ is added to the reference signal received power threshold $M + \Delta a$ to obtain the reference signal received power threshold $M + 2 * \Delta a$. By analogy, until the determined quantity of available time-frequency resource areas is greater than or equal to the first threshold, the corresponding $M + \Delta a * k$ is determined as a first reference signal received power threshold, where k is an integer greater than or equal to zero. Optionally, $\Delta a$ may be 3 dB. Optionally, $M + \Delta a * k$ is less than or equal to a maximum value in the reference signal received power threshold range.

It may be understood that, if the second terminal device sends a reference signal received power threshold to the first terminal device, the first terminal device may determine the reference signal received power threshold as the first reference signal received power threshold, instead of determining the first reference signal received power threshold in the foregoing accumulation manner, or the first terminal device may determine the first reference signal received power threshold in the foregoing accumulation manner.

In some optional implementations, if the first terminal device senses the sidelink resource in the second sensing window using the reference signal received power threshold sent by the second terminal device, even if the determined quantity of available time-frequency resource areas is less than the first threshold, the first terminal device may send the resource sensing result to the second terminal device; or the first terminal device may wait for a time interval $T_{gap,m}$ and then trigger resource sensing again. In this manner, implementation complexity of the first terminal device can be reduced, and a reliable sensing result can be provided.

Specifically, optionally, when the first terminal device senses the sidelink resource in the second sensing window using the first priority and the first reference signal received power threshold, for a specific sensing process, refer to a process in which the first terminal device senses the sidelink resource in the first sensing window. Details are not described herein again. It may be understood that, if this sensing manner is used, the resource sensing result in the second sensing window sent by the first terminal device to the second terminal device may include a data sending period obtained by parsing the SCI, so that the second terminal device selects an unoccupied sidelink resource on the second terminal device.

Alternatively, the first terminal device may sense the sidelink resource in the second sensing window using the first priority, the first reference signal received power threshold, and a first period. The first period may be a period used by the second terminal for resource reservation or a service period of the second terminal. An obtaining manner in which the first terminal device obtains the first period may be as follows. The second terminal may send one or more resource reservation periods to the first terminal, and the first terminal device may determine the first period based on the one or more resource reservation periods. The first period may be a period that is the same as a second period in a plurality of resource reservation periods. The second period is a period used by the first terminal device to perform resource sensing in the first sensing window, which may be a period in which the first terminal device sends data. The period may be included in the PSCCH sent by the first terminal device. Alternatively, the first terminal may select a resource reservation period from the plurality of resource reservation periods as the first period. Optionally, the first terminal device may send the first period to the second terminal, so that the second terminal device learns of a period used by the first terminal device to perform resource sensing in the second sensing window.

Specifically, optionally, a process in which the first terminal device senses the sidelink resource in the second sensing window using the first priority, the first reference signal received power threshold, and the first period may be as follows. The first terminal device may measure the reference signal received power of the sidelink resource, and the first terminal device may parse the SCI carried on the sidelink resource. The SCI may include a priority of data carried on the sidelink resource, a sending period of the data, and the like. Further, the terminal device may further compare the reference signal received power obtained through measurement with the first reference signal received power threshold, to obtain a reference signal received power comparison result; perform an operation on the priority included in the SCI and the first priority, and compare a priority operation result with the priority threshold, to obtain a priority comparison result; and determine whether an intersection exists by comparing the sending period of the data obtained through parsing in the SCI with the first period. Further, the first terminal device may obtain the resource sensing result in the second sensing window based on the reference signal received power comparison result, the priority comparison result, and the period comparison result. Optionally, the resource sensing result may include an occupied sidelink resource and/or an unoccupied sidelink resource. For example, the reference signal received power obtained through measurement is less than the first reference signal received power threshold, the priority operation result and the priority threshold meet a specific condition, and a resource determined based on the sending period of the data obtained by parsing the SCI does not overlap a resource determined based on the first period, then a corresponding sidelink resource is determined as an unoccupied sidelink resource in the second sensing window, or otherwise, the sidelink resource is an occupied sidelink resource. It should be noted that, that the resource determined based on the sending period of the data obtained by parsing the SCI does not overlap the resource determined based on the first period means that the resources do not overlap in the current second sensing window or in the future.

It may be understood that the first terminal device may send the first reference signal received power threshold and/or the first priority and the first period to the second terminal device, so that the second terminal device learns of the reference signal received power threshold, the priority, and the period used when the first terminal device performs the resource sensing in the second sensing window. Optionally, the first reference signal received power threshold and/or the first priority and the first period may be sent to the second terminal device together with the resource sensing result in the second sensing window.

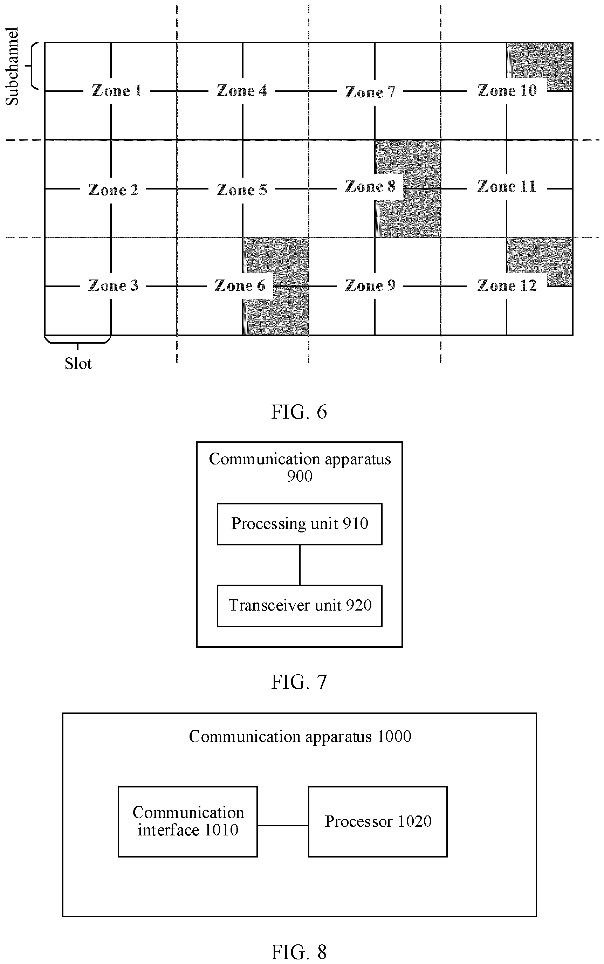

For example, the sidelink resource sensed by the first terminal device in the second sensing window may be located in one or more resource pools, and the sidelink resource included in the resource pool may be divided into at least one time-frequency resource area. For example, a time-frequency resource area may be configured based on a granularity of X slots and Y subchannels. To be specific, a time-frequency resource area may include X slots and Y subchannels. A value of X is greater than or equal to 1, and is less than or equal to a total quantity of slots in the resource pool. A value of Y is greater than or equal to 1, and is less than or equal to a total quantity of subchannels in the resource pool. Optionally, specific values of X and Y may be configured by the base station through the higher-layer signaling, or determined by the first terminal device based on a size of a resource that needs to be sensed. The size of the resource that needs to be sensed may be sent by the second terminal device to the first terminal device. Optionally, a size of a time-frequency resource area may be a size of a resource that needs to be sensed or may be an integer multiple of a size of a resource that needs to be sensed. As shown in FIG. 5 and FIG. 6, X=2 and Y=2 are used as an example. To be specific, a time-frequency resource area may include two subchannels and two slots.

In a possible implementation, when sensing a sidelink resource in the time-frequency resource area, the first terminal device may perform the resource sensing using a time-frequency resource unit as a granularity, and a size of the time-frequency resource unit is less than a size of the time-frequency resource area. For example, as shown in FIG. 5 and FIG. 6, a time-frequency resource unit may include one subchannel and one slot, a time-frequency resource area may include two slots and two subchannels, and a time-frequency resource area may include four time-frequency resource units. The first terminal device may sense the sidelink resource in the time-frequency resource units included in the time-frequency resource area in the second sensing window using the first reference signal received power threshold and the first priority. If a ratio of a quantity of occupied time-frequency resource units in a time-frequency resource area to a total quantity of time-frequency resource units included in the time-frequency resource area is greater than or equal to a second threshold, it is determined that the time-frequency resource area is occupied. If a ratio of a quantity of occupied time-frequency resource units in a time-frequency resource area to a total quantity of time-frequency resource units included in the time-frequency resource area is less than the second threshold, it is determined that the time-frequency resource area is not occupied.

In another possible implementation, when sensing a sidelink resource in the time-frequency resource area, the first terminal device may calculate an average value of the reference signal received power of the sidelink resource in the time-frequency resource area, and a highest priority, namely, a minimum priority value, of data carried on the sidelink resource in the time-frequency resource area, and determine whether the time-frequency resource area is occupied based on the average value of the reference signal received power and the highest priority.

Further optionally, the first terminal device may send the resource sensing result in the second sensing window to the second terminal device. Optionally, the resource sensing result in the second sensing window may be included in the PSSCH/PSCCH sent by the first terminal device at the first moment. For example, the resource sensing result in the second sensing window may be carried in the PSSCH as data information or a MAC CE.

The resource sensing result information in the second sensing window may include resource occupied information and/or resource unoccupied information, and the like. The following separately describes the resource occupied information and the resource unoccupied information.

The resource occupied information may include an identifier of an unavailable time-frequency resource area in the at least one time-frequency resource area.

The resource unoccupied information may include an identifier of an available time-frequency resource area in the at least one time-frequency resource area.

Optionally, it may be preset that the first terminal device sends the resource occupied information or the resource unoccupied information, or the first terminal device may determine whether to send the resource occupied information or the resource unoccupied information according to a comparison between a quantity of unavailable time-frequency resource areas and a quantity of available time-frequency resource areas.

For example, if a quantity of unavailable time-frequency resource areas in the at least one time-frequency resource area in the resource pool is less than a quantity of available time-frequency resources, the first terminal device may send the resource occupied information. As shown in FIG. 6, the sidelink resource in time-frequency resource areas 6, 8, 10, and 12 is occupied, and the first terminal reports identifiers of the time-frequency resource areas 6, 8, 10, and 12 to the second terminal device.

For example, if the quantity of the available time-frequency resource areas in the at least one time-frequency resource area in the resource pool is less than the quantity of the unavailable time-frequency resources, the first terminal device may send the resource unoccupied information. As shown in FIG. 5, the sidelink resource in time-frequency resource areas 3, 5, 7, and 9 is not occupied, and the first terminal reports identifiers of the time-frequency resource areas 3, 5, 7, and 9 to the second terminal device.

It should be noted that if the first terminal device determines whether to send the resource occupied information or the resource unoccupied information based on the comparison between the quantity of the unavailable time-frequency resource areas and the quantity of the available time-frequency resources, the resource sensing result may include indication information, where the indication information is used for indicating whether the resource occupied information or the resource unoccupied information is sent by the first terminal device. For example, the indication information may be represented by a bit value of a bit in the SCI, or the indication information may be represented by a bit value of a first bit in the resource sensing result.

The resource occupied information and the resource unoccupied information may be represented using a bitmap. The bitmap may include at least one bit, one bit corresponds to one of the at least one time-frequency resource area, and a value of the bit is used for indicating whether the time-frequency resource area corresponding to the bit is available. If the time-frequency resource area is occupied, a bit value of a corresponding bit is set to 1, or otherwise, the bit value is set to 0.

S103. The second terminal device receives the resource sensing result in the second sensing window from the first terminal device at the first moment.

Further optionally, S104 and S105 may be further included.

S104. The second terminal device determines a third candidate resource set for sidelink transmission in a second selection window, and the second terminal device determines a fourth candidate resource set based on a resource sensing result in the second sensing window, where the fourth candidate resource set is a universal set or a subset of the third candidate resource set.

S105. The second terminal device determines a sidelink resource for sending data based on the fourth candidate resource set.

In an embodiment, the second terminal device determines the third candidate resource set for sidelink transmission in the second selection window. For a manner in which the second terminal device determines the third candidate resource set, refer to the manner in which the first terminal device determines the first candidate resource set. Details are not described herein again.

The second terminal device may determine the fourth candidate resource set based on the resource sensing result in the second sensing window. The fourth candidate resource set may be a universal set or a subset of the third candidate resource set. The sidelink resource in the fourth candidate resource set may be a determined unoccupied resource. For example, the second terminal device may exclude a sidelink resource that may be occupied from the third candidate resource set based on the resource sensing result in the second sensing window, and a set including the remaining sidelink resources in the third candidate resource set is referred to as the fourth candidate resource set. The second terminal device may further select an appropriate sidelink resource from the fourth candidate resource set to send the PSSCH/PSCCH.

In some optional implementation scenarios, the second terminal device may sense a sidelink resource in a third sensing window, where the third sensing window may be the same as or different from the second sensing window; and/or another terminal device (excluding the second terminal device and the first terminal device) may sense a sidelink resource in a fourth sensing window, where the fourth sensing window may be determined based on a moment at which the another terminal device sends data. For details, refer to a manner of determining the second sensing window. Further, the second terminal device may determine the fourth candidate resource set based on the resource sensing result in the second sensing window, and/or a resource sensing result in the third sensing window, and/or a resource sensing result in the fourth sensing window. The second terminal device selects a sidelink resource for sending data based on a sensing result on the sidelink resource by each terminal device, so that accuracy of resource sensing can be improved, and a collision probability can be reduced.

The method provided in embodiments of this application is described above in detail with reference to FIG. 2 to FIG. 6. The following describes the apparatus provided in an embodiment of this application in detail with reference to FIG. 7 to FIG. 9.

It may be understood that to implement functions in the foregoing embodiments, the first terminal device and the second terminal device include a corresponding hardware structure and/or a software module for performing various functions. A person skilled in the art should be easily aware that, in combination with the units and the method steps in the examples described in embodiments disclosed in this application, this application can be implemented by hardware, software, or a combination of hardware and software. Whether a function is performed by hardware, software, or hardware driven by computer software depends on particular application scenarios and design constraints of the technical solutions.

FIG. 7 is a schematic block diagram of a communication apparatus according to an embodiment of this application. As shown in FIG. 7, the communication apparatus 900 may include a processing unit 910 and a transceiver unit 920. The processing unit 910 and the transceiver unit 920 may be software, or may be hardware, or may be a combination of software and hardware.

The transceiver unit 920 may include a sending unit and a receiving unit. The sending unit is configured to implement a sending function, the receiving unit is configured to implement a receiving function, and the transceiver unit 920 may implement the sending function and/or the receiving function. The transceiver unit may alternatively be described as a communication unit.

Optionally, the transceiver unit 920 may be configured to receive a message sent by another apparatus, and may also be configured to send a message to another apparatus. The processing unit 910 may be configured to perform internal processing of an apparatus.

In a possible design, the communication apparatus 900 corresponds to the first terminal device in the foregoing method embodiment, for example, the communication apparatus 900 may be the first terminal device, or may be a chip in the first terminal device. The communication apparatus 900 may include a unit for operation executed by the first terminal device in the foregoing method embodiment, and each unit in the communication apparatus 900 is for implementing operation executed by the first terminal device in the foregoing method embodiment respectively.

For example, the processing unit 910 is configured to: determine, in a first selection window, a first candidate resource set for sidelink transmission; and determine a second candidate resource set based on a resource sensing result in the first sensing window, where the second candidate resource set is a universal set or a subset of the first candidate resource set.

The processing unit 910 is further configured to sense sidelink resource in a second sensing window.

The transceiver unit 920 is configured to send a resource sensing result in the second sensing window to a second terminal device at a first moment, where the first moment is determined based on the second candidate resource set.

Optionally, a start time domain position of the second sensing window is determined based on the first moment and a first offset, an end time domain position of the second sensing window is determined based on the first moment and the second offset, and the first offset is greater than the second offset.

Optionally, the first offset and/or the second offset are or is determined based on the first sensing window.

Optionally, the first offset is $T_0 + C$, and the second offset is $T_{proc,0} + C$; and

$T_0$ is an offset of a start time domain position of the first sensing window relative to a second moment, $T_{proc,0}$ is an offset of an end time domain position of the first sensing window relative to the second moment, the second moment is a moment at which the first terminal device triggers resource selection, and C is a constant greater than or equal to 0.

Optionally, the second offset is $T_{proc,0}$, $T_{proc,0}$ is an offset of an end time domain position of the first sensing window relative to a second moment, and the second moment is a moment at which the first terminal device triggers resource selection;

the first offset is determined based on a ratio relationship between a length of the first sensing window and a length of the second sensing window; or the first offset is determined based on a priority of data sent by the first terminal device and/or a priority of data sent by the second terminal device.

Optionally, the first offset and/or the second offset are or is configured by a network device; or the first offset and/or the second offset are or is sent by the second terminal device to the first terminal device.

Optionally, the sidelink resource is located in one or more resource pools, the sidelink resource included in the resource pool is divided into at least one time-frequency resource area, and one time-frequency resource area includes one or more slots and one or more subchannels.

The resource sensing result includes resource occupied information and/or resource unoccupied information.

The resource occupied information includes an identifier of an unavailable time-frequency resource area in the at least one time-frequency resource area.

The resource unoccupied information includes an identifier of an available time-frequency resource area in the at least one time-frequency resource area.

Optionally, the resource occupied information and the resource unoccupied information are represented using a bitmap, the bitmap includes at least one bit, one bit corresponds to one of the at least one time-frequency resource area, and a value of the bit is for indicating whether the time-frequency resource area corresponding to the bit is available.

Optionally, the transceiver unit 920 is further configured to receive one or more priorities from the second terminal device.

The processing unit 910 is further configured to determine a first priority based on the one or more priorities.

The transceiver unit 920 is further configured to receive a reference signal received power threshold or a reference signal received power threshold range from the second terminal device.

The processing unit 910 is further configured to determine a first reference signal received power threshold based on the reference signal received power threshold or the reference signal received power threshold range.

The processing unit 910 is further configured to sense the sidelink resource in the second sensing window using the first priority and the first reference signal received power threshold.

Optionally, the first priority is a priority whose priority value is the same as a value of a second priority in the one or more priorities; or

the first priority is a priority with a smallest priority value in the one or more priorities; or
the first priority is a priority with a smallest priority value in the second priority and the one or more priorities; and
the second priority is for resource sensing performed by the first terminal device in the first sensing window.

Optionally, the first reference signal received power threshold is $M + \Delta a * k$; and the first reference signal received power threshold meets a target condition.

The target condition includes:

a ratio of a quantity of available time-frequency resource areas sensed in the second sensing window using a second reference signal received power threshold to a total quantity of the at least one time-frequency resource area being less than a first threshold, and a ratio of a quantity of available time-frequency resource areas sensed in the second sensing window using the first reference signal received power threshold to a total quantity of the at least one time-frequency resource area being greater than or equal to the first threshold, where the second reference signal received power threshold is $M + \Delta a * (k - 1)$, where
M is the reference signal received power threshold or a minimum value in the reference signal received power threshold range, $\Delta a$ is a power increment, $k$ is an integer greater than or equal to 0, and the first reference signal received power threshold $M + \Delta a * k$ falls within the reference signal received power threshold range.

Optionally, the transceiver unit 920 is further configured to send the first priority and/or the first reference signal received power threshold to the second terminal device.

In a possible design, the communication apparatus 900 may correspond to the second terminal device, or may be a chip in the second terminal device. Optionally, the communication apparatus 900 may be the second terminal device or a chip in a second terminal device. The communication apparatus 900 may include a unit for operation executed by the second terminal device in the foregoing method embodiments, and each unit in the communication apparatus 900 is for implementing operation executed by the second terminal device in the foregoing method embodiments respectively.

The transceiver unit 920 is configured to receive the resource sensing result in the second sensing window from the first terminal device at the first moment, where the first moment is determined based on the second candidate resource set, the second candidate resource set is determined by the first terminal device based on the resource sensing result in the first sensing window, the second candidate resource set is a universal set or a subset of a first candidate resource set, and the first candidate resource set is a resource set determined by the first terminal device in a first selection window for sidelink transmission.

The processing unit 910 is configured to determine a third candidate resource set for sidelink transmission in a second selection window, and determine a fourth candidate resource set based on the resource sensing result in the second sensing window, where the fourth candidate resource set is a universal set or a subset of the third candidate resource set.

The processing unit 910 is further configured to determine a sidelink resource for sending data based on the fourth candidate resource set.

Optionally, a start time domain position of the second sensing window is determined based on the first moment and a first offset, an end time domain position of the second sensing window is determined based on the first moment and the second offset, and the first offset is greater than the second offset.

It should be understood that when the communication apparatus 900 is a chip configured in the first terminal device or the second terminal device, the transceiver unit 920 in the communication apparatus 900 may be an input/output interface.

It should be understood that when the communication apparatus 900 is the first terminal device or the second terminal device, the transceiver unit 920 in the communication apparatus 900 may correspond to a communication interface 1010 shown in FIG. 8, and the processing unit 910 may correspond to a processor 1020 shown in FIG. 8.

FIG. 8 is a schematic diagram of a structure of a communication apparatus according to an embodiment of this application. It should be understood that the communication apparatus 1000 shown in FIG. 8 is merely an example. The communication apparatus in this embodiment of this application may further include another module or unit, or include a module having a function similar to those of modules in FIG. 8, or does not necessarily need to include all the modules in FIG. 8.

The communication apparatus 1000 includes the communication interface 1010 and at least one processor 1020.

The communication apparatus 1000 may correspond to a first terminal device or a second terminal device. The at least one processor 1020 executes a program instruction causing the communication apparatus 1000 to implement a corresponding process of the method executed by a corresponding terminal device in the foregoing method embodiments.

In a possible design, the communication apparatus 1000 corresponds to the first terminal device in the foregoing method embodiment, for example, the communication apparatus 100 may be the first terminal device, or may be a chip in the first terminal device. The communication apparatus 1000 may include a component for performing the operation performed by the first terminal device in the foregoing method embodiments.

For example, the processor 1020 is configured to determine, in a first selection window, a first candidate resource set for sidelink transmission; and determine a second candidate resource set based on a resource sensing result in the first sensing window, where the second candidate resource set is a universal set or a subset of the first candidate resource set.

The processor 1020 is further configured to sense a sidelink resource in a second sensing window.

The communication interface 1010 is configured to send a resource sensing result in the second sensing window to a second terminal device at a first moment, where the first moment is determined based on the second candidate resource set.

In a possible design, the communication apparatus 1000 may correspond to the second terminal device, or may be a chip in the second terminal device. The communication apparatus 1000 may include a component for performing the operation performed by the second terminal device in the foregoing method embodiment, and each component in the communication apparatus 1000 is for implementing the operation performed by the second terminal device in the foregoing method embodiment respectively.

The communication interface 1010 is configured to receive a resource sensing result in a second sensing window from a first terminal device at the first moment where the first moment is determined based on a second candidate resource set, the second candidate resource set is determined by the first terminal device based on the resource sensing result in the first sensing window, the second candidate resource set is a universal set or a subset of a first candidate resource set, and the first candidate resource set is a resource set determined by the first terminal device in the first selection window for the sidelink transmission.

The processor 1020 is configured to determine a third candidate resource set for the sidelink transmission in the second selection window, and determine a fourth candidate resource set based on a resource sensing result in the second sensing window, where the fourth candidate resource set is a universal set or a subset of the third candidate resource set.

The processor 1020 is further configured to determine a sidelink resource for sending data based on the fourth candidate resource set.

Optionally, the communication apparatus 1000 may further include a memory. The memory may store the program instruction, and the at least one processor 1020 may read the program instruction stored in the memory, and execute the program instruction.

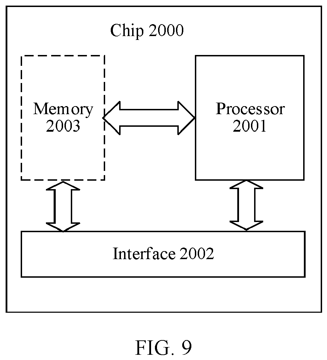

For a situation in which the communication apparatus may be a chip or a chip system, refer to a schematic diagram of a structure of a chip shown in FIG. 9. The chip 2000 shown in FIG. 9 includes a processor 2001 and an interface 2002. There may be one or more processors 2001, and there may be a plurality of interfaces 2002. It should be noted that functions respectively corresponding to the processor 2001 and the interface 2002 may be implemented through a hardware design, a software design, or a combination of software and hardware. This is not limited herein.

In a possible design, for a situation in which the chip is configured to implement a function of the first terminal device in this embodiment of this application, the processor 2001 is configured to determine, in a first selection window, a first candidate resource set for sidelink transmission; and determine a second candidate resource set based on a resource sensing result in a first sensing window, where the second candidate resource set is a universal set or a subset of the first candidate resource set. The processor 2001 is further configured to sense a sidelink resource in a second sensing window. The interface 2002 is configured to send a resource sensing result in the second sensing window to a second terminal device at a first moment, where the first moment is determined based on the second candidate resource set.

For a situation in which the chip is configured to implement a function of the second terminal device in this embodiment of this application, the interface 2002 is configured to receive a resource sensing result in a second sensing window from a first terminal device at a first moment, where the first moment is determined based on a second candidate resource set, the second candidate resource set is determined by the first terminal device based on the resource sensing result in a first sensing window, the second candidate resource set is a universal set or a subset of a first candidate resource set, and the first candidate resource set is a resource set determined by the first terminal device in a first selection window for sidelink transmission. The processor 2001 is configured to determine a third candidate resource set for the sidelink transmission in a second selection window; determine a fourth candidate resource set based on a resource sensing result in the second sensing window, where the fourth candidate resource set is a universal set or a subset of the third candidate resource set; and determine a sidelink resource for sending data based on the fourth candidate resource set.

Optionally, the chip further includes a memory 2003. The memory 2003 is configured to store necessary instructions and data.

The processor in this embodiment of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

According to the method provided in embodiments of this application, this application further provides a computer program product, including computer program code, the computer program code, when run on a computer, causing the computer to perform the method of the first terminal device side or the second terminal device side in any one of the foregoing method embodiments.

In another embodiment of this application, a communication system is provided. The communication system includes a first terminal device and a second terminal device. For example, the first terminal device and the second terminal device may be the first terminal device and the second terminal device provided in the embodiment in FIG. 2, and are configured to perform the steps performed by corresponding network elements in the embodiment in FIG. 2.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), the field programmable gate array (field programmable gate array, FPGA), another programmable logic device, a discrete gate, a transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD), or another integrated chip. The methods, steps, and logical block diagrams disclosed in embodiments of this application may be implemented or performed. The general-purpose processor may be a microprocessor, or the processor may be any conventional processor or the like. The steps of the methods disclosed with reference to embodiments of this application may be directly performed and completed by a hardware decoding processor, or may be performed and completed by a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in embodiments of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitation, RAMs in many forms may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification includes but is not limited to these memories and any memory of another appropriate type.

All or some of the foregoing embodiments may be implemented through software, hardware, firmware, or any combination thereof. When software is used to implement embodiments, all or a part of embodiments may be implemented in a form of a computer program product. The computer program product includes one or more computer instructions. When the computer instruction is loaded and executed on a computer, the procedures or functions according to embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disc (solid-state disc, SSD)), or the like.

The first terminal device and the second terminal device in each apparatus embodiments completely correspond to the first terminal device and the second terminal device in the method embodiments, and a corresponding step is performed by a corresponding module or unit, for example, the communication unit (transceiver) performs a step of receiving or sending in the method embodiments, and another step other than receiving or sending may be performed by the processing unit (processor). For a function of a specific unit, refer to a corresponding method embodiment. There may be one or more processors.

Terms such as "component", "module", and "system" used in this specification are used to indicate a computer-related entity, hardware, firmware, a combination of hardware and software, software, or software being executed. For example, a component may be, but is not limited to, a process that runs on a processor, a processor, an object, an executable file, an execution thread, a program, or a computer. As shown in figures, both a computing device and an application that runs on the computing device may be components. One or more components may reside within a process or an execution thread, and the component may be located on one computer or distributed between two or more computers. In addition, these components may be executed by various computer-readable media that store various data structures. For example, the components may communicate through a local or remote process based on a signal having one or more data packets (for example, data from two components interacting with another component in a local system, in a distributed system, or across a network such as the Internet interacting with another system through the signal).

It should be understood that, an "embodiment" mentioned throughout this specification means that particular features, structures, or characteristics related to this embodiment are included in at least one embodiment of this application. Therefore, embodiments in the entire specification are not necessarily the same embodiments. In addition, these particular features, structures, or characteristics may be combined in one or more embodiments in any appropriate manner.

It should be understood that, in embodiments of this application, numbers "first", "second", and the like are merely used to distinguish between different objects, for example, to distinguish between different network devices, and do not constitute any limitation on the scope of embodiments of this application. Embodiments of this application are not limited thereto.

It should be further understood that, in this application, both "when" and "if" mean that a network element performs corresponding processing in an objective situation, but do not constitute any limitation on time, do not require the network element to perform a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based on only A. B may alternatively be determined based on A and/or other information.

It should be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, when more elements are included in the expression, a case to which the item is applicable may also be obtained according to the foregoing rule.

It may be understood that in embodiments of this application, the first terminal device and the second terminal device may perform partial or all steps in embodiments of this application. The steps or operations are merely examples, and other operations or variations thereof may further be performed in embodiments of this application. In addition, the steps may be performed in a sequence different from a sequence presented in embodiments of this application, and not all operations in embodiments of this application need to be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, reference may be made to a corresponding process in the foregoing method embodiments, and details are not described herein again.

In several embodiments provided in this application, it should be understood that the disclosed system, apparatuses, and method may be implemented in another manner. For example, the described apparatus embodiment is merely an example. For example, division of the units is merely a logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the related art, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A resource sensing method, comprising:

   determining, by a first terminal device in a first selection window, a first candidate resource set for sidelink transmission, and determining, by the first terminal device, a second candidate resource set based on a resource sensing result in a first sensing window, wherein the second candidate resource set is a universal set or a subset of the first candidate resource set; and
   sensing, by the first terminal device, a sidelink resource in a second sensing window, and sending a resource sensing result in the second sensing window to a second terminal device at a first moment, wherein the first moment is determined based on the second candidate resource set.

2. The method according to claim 1, wherein a start time domain position of the second sensing window is determined based on the first moment and a first offset, an end time domain position of the second sensing window is determined based on the first moment and a second offset, and the first offset is greater than the second offset.

3. The method according to claim 2, wherein the first offset and/or the second offset are or is determined based on the first sensing window.

4. The method according to claim 3, wherein the first offset is $T_0$ + C, and the second offset is $T_{proc,0}$ + C, wherein $T_0$ is an offset of a start time domain position of the first sensing window relative to a second moment, $T_{proc,0}$ is an offset of an end time domain position of the first sensing window relative to the second moment, the second moment is a moment at which the first terminal device triggers resource selection, and C is a constant greater than or equal to zero.

5. The method according to claim 2 or 3, wherein the second offset is $T_{proc,0}$, $T_{proc,0}$ is an offset of an end time domain position of the first sensing window relative to a second moment, and the second moment is a moment at which the first terminal device triggers resource selection; and
   the first offset is determined based on a ratio relationship between a length of the first sensing window and a length of the second sensing window; or the first offset is determined based on a priority of data sent by the first terminal device and/or a priority of data sent by the second terminal device.

6. The method according to claims 2 and 3, wherein the first offset and/or the second offset are or is configured by a network device; or the first offset and/or the second offset are or is sent by the second terminal device to the first terminal device.

7. The method according to any one of claims 1 to 6, wherein the sidelink resource is located in one or more resource pools, the sidelink resource comprised in the resource pool is divided into at least one time-frequency resource area, and one time-frequency resource area comprises one or more slots and one or more subchannels;

   the resource sensing result comprises resource occupied information and/or resource unoccupied information;
   the resource occupied information comprises an identifier of an unavailable time-frequency resource area in the at least one time-frequency resource area; and
   the resource unoccupied information comprises an identifier of an available time-frequency resource area in the at least one time-frequency resource area.

8. The method according to claim 7, wherein the resource occupied information and the resource unoccupied information are represented using a bitmap, the bitmap comprises at least one bit, one bit corresponds to one of the at least one time-frequency resource area, and a value of the bit is for indicating whether the time-frequency resource area corresponding to the bit is available.

9. The method according to any one of claims 1 to 8, wherein the method further comprises:

   receiving, by the first terminal device, one or more priorities from the second terminal device;
   determining, by the first terminal device, a first priority based on the one or more priorities;
   receiving, by the first terminal device, a reference signal received power threshold or a reference signal received power threshold range from the second terminal device; and
   determining, by the first terminal device, a first reference signal received power threshold based on the reference signal received power threshold or the reference signal received power threshold range; and
the sensing, by a first terminal device, a sidelink resource in a second sensing window comprises:
sensing, by the first terminal device, the sidelink resource in the second sensing window using a first priority and a first reference signal received power threshold.

10. The method according to claim 9, wherein the first priority is a priority whose priority value is the same as a value of a second priority in the one or more priorities; or

the first priority is a priority with a smallest priority value in the one or more priorities; or
the first priority is a priority with a smallest priority value in the second priority and the one or more priorities; and
the second priority is for resource sensing performed by the first terminal device in the first sensing window.

11. The method according to claim 9, wherein the first reference signal received power threshold is $M + \Delta a * k$, and the first reference signal received power threshold meets a target condition;

the target condition comprises: a ratio of a quantity of available time-frequency resource areas sensed in the second sensing window using a second reference signal received power threshold to a total quantity of the at least one time-frequency resource area is less than a first threshold, a ratio of a quantity of available time-frequency resource areas sensed in the second sensing window using the first reference signal received power threshold to a total quantity of the at least one time-frequency resource area is greater than or equal to the first threshold, and the second reference signal received power threshold is $M + \Delta a * (k - 1)$, wherein
$M$ is the reference signal received power threshold or a minimum value in the reference signal received power threshold range, $\Delta a$ is a power increment, $k$ is an integer greater than or equal to 0, and the first reference signal received power threshold $M + \Delta a * k$ falls within the reference signal received power threshold range.

12. The method according to any one of claims 9 to 11, wherein the method further comprises:
sending, by the first terminal device, the first priority and/or the first reference signal received power threshold to the second terminal device.

13. A resource sensing method, comprising:

receiving, by a second terminal device, a resource sensing result in a second sensing window from a first terminal device at a first moment, wherein the first moment is determined based on a second candidate resource set, the second candidate resource set is determined by the first terminal device based on the resource sensing result in a first sensing window, the second candidate resource set is a universal set or a subset of a first candidate resource set, and the first candidate resource set is a resource set that is determined by the first terminal device in a first selection window for sidelink transmission;
determining, by the second terminal device, a third candidate resource set for the sidelink transmission in a second selection window, and determining, by the second terminal device, a fourth candidate resource set based on a resource sensing result in the second sensing window, wherein the fourth candidate resource set is a universal set or a subset of the third candidate resource set; and
determining, by the second terminal device, a sidelink resource for sending data based on the fourth candidate resource set.

14. The method according to claim 13, wherein a start time domain position of the second sensing window is determined based on the first moment and a first offset, an end time domain position of the second sensing window is determined based on the first moment and a second offset, and the first offset is greater than the second offset.

15. A communication apparatus, comprising a module configured to perform the method according to any one of claims 1 to 12 or claims 13 to 14.

16. A communication apparatus, comprising a processor and a memory, wherein the processor is coupled to the memory, and the processor is configured to implement the method according to any one of claims 1 to 12 or claims 13 to 14.

17. A communication apparatus, comprising a processor and an interface circuit, wherein the interface circuit is configured to receive a signal from a communication apparatus other than the communication apparatus and transmit the signal to the processor or send the signal from the processor to a communication apparatus other than the communication apparatus, and the processor is configured to implement the method according to any one of claims 1 to 12 or claims 13 to 14 through a logic circuit or executing a code instruction.

18. A computer-readable storage medium, storing a computer program or an instruction, wherein the computer program or the instruction, when executed by a communication apparatus, implements the method according to any one of claims 1 to 12 or claims 13 to 14.

Terminal device 2

Terminal device 1

FIG. 1a

Terminal device 2

Terminal device 1

Terminal device 3

Terminal device 4

FIG. 1b

```
┌──────────┐                              ┌──────────┐
│  First   │                              │  Second  │
│ terminal │                              │ terminal │
│  device  │                              │  device  │
└──────────┘                              └──────────┘
```

S101. The first terminal device determines a first candidate resource set for sidelink transmission in a first selection window, and the first terminal device determines a second candidate resource set based on a resource sensing result in a first sensing window

S102. The first terminal device senses a sidelink resource in a second sensing window, and sends a resource sensing result in a second sensing window to a second terminal device at a first moment

S103. The second terminal device receives the resource sensing result in the second sensing window from the first terminal device at the first moment

S104. The second terminal device determines a third candidate resource set for sidelink transmission in a second selection window, and the second terminal device determines a fourth candidate resource set based on a resource sensing result in a second sensing window

S105. The second terminal device determines a sidelink resource for sending data based on the fourth candidate resource set

FIG. 2

FIG. 3

FIG. 4

FIG. 5

FIG. 6

FIG. 7

FIG. 8

FIG. 9

| INTERNATIONAL SEARCH REPORT | International application No. |
|---|---|
| | **PCT/CN2021/110145** |

**A.    CLASSIFICATION OF SUBJECT MATTER**

H04W 4/40(2018.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 选择, 感知, 感测, 监听, 窗, 时刻, 时隙, 时间, 候选, 偏移, 资源, 集合, 侧行, 辅链路, selection, sensing, window, tim+, slot?, candidate, offset, resource, set, sidelink

**C.    DOCUMENTS CONSIDERED TO BE RELEVANT**

| Category* | Citation of document, with indication, where appropriate, of the relevant passages | Relevant to claim No. |
|---|---|---|
| A | CN 111246426 A (BEIJING SPREADTRUM HIGH-TECH COMMUNICATIONS TECHNOLOGY CO., LTD.) 05 June 2020 (2020-06-05)<br>    description paragraphs 0059-0086 | 1-18 |
| A | CN 111294752 A (ZHANXUN SEMICONDUCTOR (NANJING) CO., LTD.) 16 June 2020 (2020-06-16)<br>    entire document | 1-18 |
| A | CN 108112036 A (POTEVIO INFORMATION TECHNOLOGY CO., LTD.) 01 June 2018 (2018-06-01)<br>    entire document | 1-18 |
| A | HUAWEI et al. "Remaining details of sidelink resource allocation mode 2"<br>*3GPP TSG RAN WG1 Meeting #100-e R1-2000183*, 06 March 2020 (2020-03-06),<br>    entire document | 1-18 |
| A | SAMSUNG. "On Mode 2 for NR Sidelink"<br>*3GPP TSG RAN WG1 #100bis R1-2002126*, 30 April 2020 (2020-04-30),<br>    entire document | 1-18 |
| A | WO 2020060276 A1 (LG ELECTRONICS INC.) 26 March 2020 (2020-03-26)<br>    entire document | 1-18 |

☑ Further documents are listed in the continuation of Box C.        ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"    document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **20 October 2021** | **01 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/110145**

**C.      DOCUMENTS CONSIDERED TO BE RELEVANT**

| Category* | Citation of document, with indication, where appropriate, of the relevant passages | Relevant to claim No. |
|---|---|---|
| A | WO 2020024175 A1 (PANASONIC INTELLECTUAL PROPERTY CORPORATION OF AMERICA) 06 February 2020 (2020-02-06) entire document | 1-18 |

Form PCT/ISA/210 (second sheet) (January 2015)

**INTERNATIONAL SEARCH REPORT**
Information on patent family members

International application No.

**PCT/CN2021/110145**

| Patent document cited in search report | | | Publication date (day/month/year) | Patent family member(s) | | | Publication date (day/month/year) |
|---|---|---|---|---|---|---|---|
| CN | 111246426 | A | 05 June 2020 | WO | 2021143955 | A1 | 22 July 2021 |
| CN | 111294752 | A | 16 June 2020 | None | | | |
| CN | 108112036 | A | 01 June 2018 | None | | | |
| WO | 2020060276 | A1 | 26 March 2020 | None | | | |
| WO | 2020024175 | A1 | 06 February 2020 | US | 2021266921 | A1 | 26 August 2021 |

Form PCT/ISA/210 (patent family annex) (January 2015)

**REFERENCES CITED IN THE DESCRIPTION**

**Patent documents cited in the description**

- CN 202010785378